# EUROPEAN PATENT APPLICATION

(11) **EP 1 413 980 A1**
(43) Date of publication of application: **28.04.2004**
(21) Application number: 03291241.2
(22) Date of filing: 23.05.2003
(51) Int. Cl.: G06K 19/073, G07F 7/10

(54) **Protection of a portable object against denial of service type attacks**

(30) Priority: 24.10.2002 EP 02292651
(71) Applicant: SCHLUMBERGER Systèmes, 92120 Montrouge (FR)
(72) Inventor: Wlodarczyk, Lukasz, 92120 Montrouge (FR)
(74) Representative: Gabriel, Franck

(57) **Abstract**

A portable object comprises a memory where at least one credential is stored. The credential is associated with a service and used to verify that the entity requesting a service is an authorized entity for accessing the service. The method for protecting a portable object against denial of service type attacks comprises the steps of :
- verifying that the entity requesting a service is an authorized entity for accessing the service, based on an algorithm involving the credential,
- delivering the requested service only when the verification step succeeded,
- blocking the credential associated with the service after a certain number of verification step failed.

When the verification step failed, the method further comprises the steps of waiting during a duration before allowing a new verification step.

## Description

### Field of the invention

The invention relates to a method for protecting a portable object against denial of service type attacks. The invention also proposed a portable object, in particular a smart-card able to resist to denial of service type attacks.

### Background of the invention

One of the fundamental features of smart-card technology is the ability to act as a secure repository for various credentials, like personal identification number (PIN code) various keys and codes (e.g unblocking code like PIN unblocking key also known as PUK)...etc.
In the context of smart-card being used for authentication purpose, the smart-card is used to verify the identity of an entity requesting a service by checking whether the credential supplied by the entity matches the credential stored in the smart-card memory. Such an entity can be for example a user, a terminal, a server, an administrator, or an application.
Currently, when credentials are verified by a smart-card for authentication purpose, an internal counter is decremented each time the verification fails. When this counter reaches zero, the associated credentials are blocked.
Some credentials can be unblocked or reprogrammed (by entities having sufficient privileges), but others can't, and blocking them often results in a need to physically replace the smart-card.
As an example, if a user blocks his PIN after having incorrectly made numerous tentative, an administrator can unblock it with an unblock code. If both the PIN and the unblock code are blocked, a smart-card management system could re-personalize the smart-card by using the transport key. If only the transport key and unblock codes are blocked, then the card is still usable as long as the PIN is not forgotten/blocked by the user and no administrative operations are needed on the smart-card. However, in case the PIN, the unblock code and the transport key are blocked, it is necessary to physically change the smart-card.

Smart-cards were not initially designed for use as security devices protecting personal computers (PCs) and networks interconnecting those PCs. However, more and more, smart-cards are used for enabling users to access to networks and/or authenticating users on a network. A family of attacks that is very relevant in such context (especially in corporate environments) has not been taken into account when specifying smart-cards features. One of the most popular and frequent attacks on the internet is the denial of service attack (DOS). Such an attack consists in attacking a component of the network (e.g. a server) by overloading it with requests. The component becomes unable to perform its duties, and as a consequence the end users are stuck. The system is not necessarily compromised, but it is not usable anymore. A possible implementation of a DOS attack consists of a virus hitting an organization or a corporation by trying wrong credentials until the smart-cards get blocked (e.g. by sending credentials verification commands with random data). The consequence of such an attack could be thousands of users unable to work. While end users' PCs can be recovered automatically thanks to backup systems, smart-cards would need to be physically replaced. During this replacement phase (which might be very long and costly for organizations or corporations) users would be unable to log on to their PCs and secure their networks, or would have to do this with usernames and passwords which have a much lower security level than an access and/or authentication via smart-cards.

Also another frequent problem with prior art smart-card blocking system is arising during the development or personalization phase of the smart-cards. One of the most frequent calls to the technical support teams is due to smart-cards that were accidentally blocked and cannot be programmed anymore. The technical supports need to figure out that the cards were actually blocked. People often think that there's a problem with the smart-card or with the smart-card software development tools that they are using. When smart-card are blocked in the development or personalization phase, it is often necessary to supply the developers with a new set of smart-cards, which can be quite expensive and/or time consuming.

### Object and summary of the invention

Therefore it is an object of the present invention to provide a method and system that overcomes the at least one shortcoming of the prior art system.

The invention proposes to modify the consequence of failed credential verification by adding a waiting duration before any new credential verification can be performed.
Particular implementations are either to have a counter that has a different behavior when it reaches a determined value or to add a second credential counter which works slightly differently than the usual first credential counter. Once the counter or the first counter reaches a particular value, rather than blocking the credentials, the smart-card continues decrementing the counter or starts decrementing a second counter, this new decrementation being associated with a waiting loop mechanism.

According to the invention, the method for protecting a portable object against denial of service type attacks, said portable object comprising a memory where at least one credential is stored, each credential being associated with a service, comprises the steps of :
- verifying that the entity requesting a service is an authorized entity for accessing the service, based on an algorithm involving the credential,
- delivering the requested service only when the verification step succeeded,
- blocking the credential associated with the service after a certain number of verification step failed,
- waiting during a duration before allowing a new verification step, when the verification step failed.

The waiting duration can be a constant duration or alternatively a variable duration.

Advantageously, the waiting duration is equal to zero for a first predetermined number verification step that have failed, and the waiting duration is greater than zero for a second predetermined number of failed verification step.

Advantageously, the step of waiting during a determined duration is implemented by a waiting loop mechanism.

Advantageously, the step of waiting during a determined duration is resumed in case the verification step is interrupted before the duration has elapsed. Typically, this can arise when the power supply of the portable object is cut off.

A first implementation of the method according to the invention consists in :
- decrementing a counter associated with the at least one credential each time a verification step is performed, said counter having values ranging between an initial value and a credential blocking value,
- resetting the counters to an initial value when the verification step succeed, and, when the counter has reached an intermediate value, the method further consists in :

- waiting during a duration when verification step failed, and
- blocking the credential when the counter reaches the credential blocking value.

A second implementation of the method according to the invention consists in :
- decrementing a first counter associated with the at least one credential each time a verification step is performed, said first counter having values ranging between a first initial value and an intermediate value,
   and, when the first counter has reached the intermediate value, the method further consists in :
   - decrementing a second counter associated with the first counter, said first counter having values ranging between a second initial value and a credential blocking value,
   - resetting the first and second counters to their respective initial value when verification step succeed,
   - waiting during a duration when verification step failed,
   - blocking the credential when the second counter reaches the credential blocking value.

The decrementing step of the counter or the first counter or the second counter can be performed before the verification step or after the verification step.

It is also proposed a portable object, in particular a smart-card which comprises:
- a memory where at least one credential is stored, each credential being associated with a service, said credential being used to verify that the entity requesting a service is an authorized entity for accessing the service,
- a counter associated with the at least one credential which is decremented each time a verification that the entity requesting a service is an authorized entity for accessing the service failed, said counter having values ranging between an initial value and a credential blocking value, said counter being reset to the initial value when verification succeed, and
- a waiting loop mechanism which is activated when the counter has reached a intermediate value and each time a verification failed.

In a particular embodiment, the counter comprises a first and a second counter. The first counter associated with the at least one credential is decremented from a first initial value to an intermediate value each time a verification that the entity requesting a service is an authorized entity for accessing the service failed. The second counter is decremented from a second initial value to a credential blocking value when the first counter has reached the intermediate value and each time a verification failed.

Advantageously, the waiting loop mechanism comprises a loop flag used to resume the step of waiting during a duration performed by the waiting loop mechanism in case said step is interrupted before the duration has elapsed.

It is also proposed a computer program product comprising a computer readable medium, having thereon computer program code means, when said program is loaded into the memory of the portable object, to make the portable object execute the method for protecting said portable object against denial of service type attacks.

The invention is applicable to any microprocessor smart-card, and to other kinds of hardware tokens.
The invention is particularly advantageous to protect applications built around corporate badges, i.e. portable object used for authentication purpose by employee of a corporation or members of an organization.
The invention is also applicable to any type of smart-card and for any application.
The invention made massive smart-card destruction by DOS attacks much more difficult. Also, problems linked to smart-cards being blocked accidentally by smart-cards application developers are significantly reduced.

Other characteristics and advantages of the invention will be described in a more detailed way in the following description of the invention and in one practical example of application.

### Brief description of the drawings

The following detailed description, given by way of example, will be best understood with the accompanying drawings in which :
- Figure 1 represents schematically the implementation of a state of the art process for verifying that the entity requesting a service is an authorized one, in the particular domain of standard ISO 7816 compliant smart-cards,
- Figure 2 represents schematically a particular implementation of the anti-DOS mechanism of the invention in the process for verifying that the entity requesting a service is an authorized one, in the particular domain of standard ISO 7816 compliant smart-cards.

### Detailed description of the invention

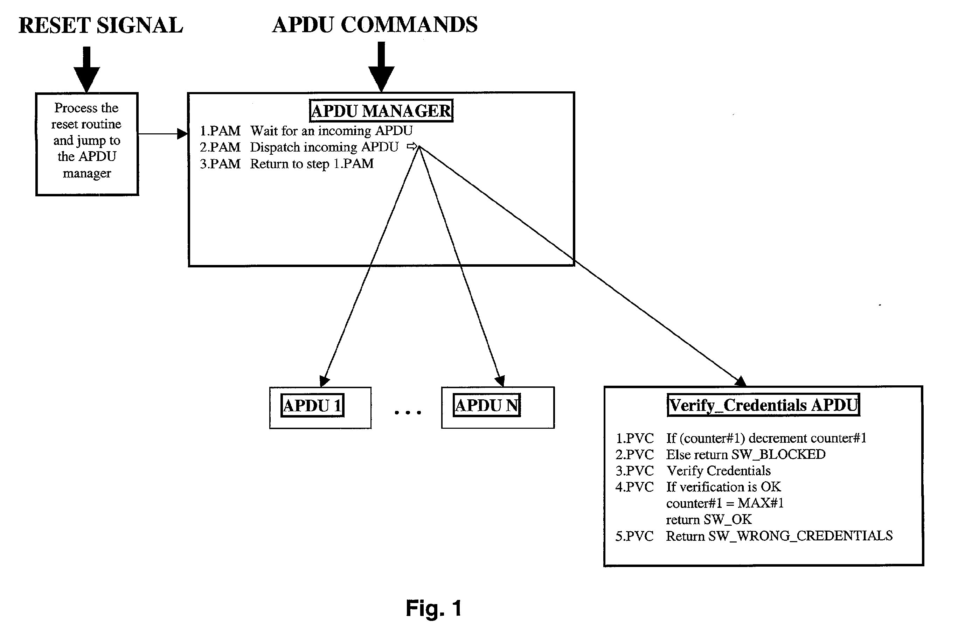

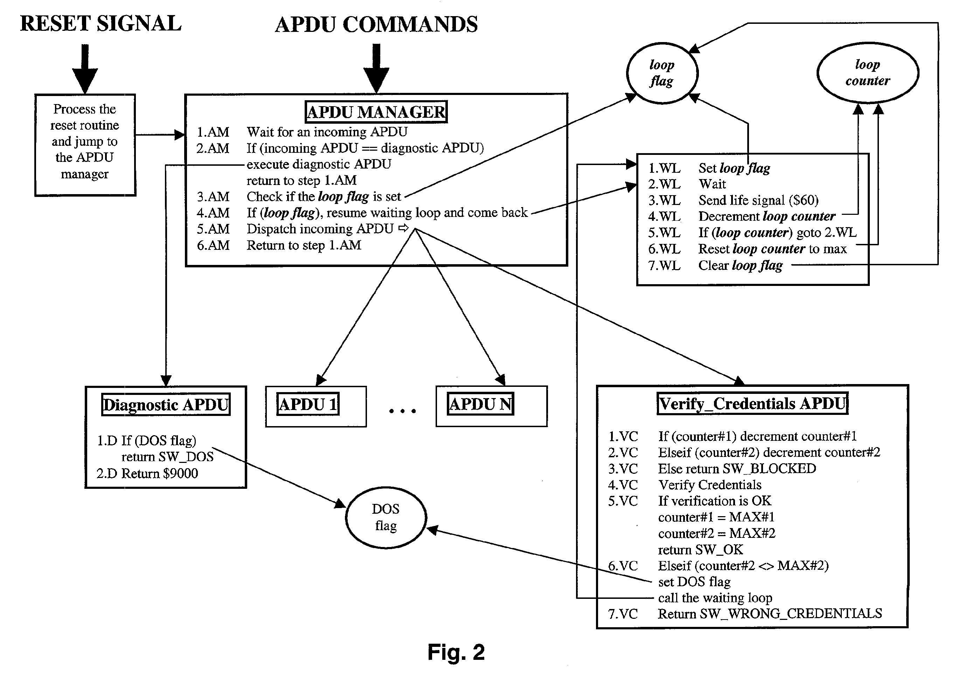

According to a particular implementation of the invention, the existing counter, also named attempts counter (counter#1 on Fig.1 and Fig.2) is kept, and it is complemented with a second attempt counter (counter#2 on Fig.2).
The first counter usually has an initial value varying between 1 and 15. The counter is pre-decremented (step 1.PVC on Fig.1 - step 1.VC on Fig.2) before each credentials verification (step 3.PVC on Fig.1 - step 4.VC on Fig.2). As an alternative, the counter can be decremented after each credentials verification.

If the verification succeeds, the counter is reset to its maximum value (step 4.PVC on Fig.1 - step 5.VC on Fig.2), otherwise it is unchanged (step 5.PVC on Fig.1 - step 7.VC on Fig.2).
The newly added counter or second counter starts being decremented only after the first counter reaches zero. When the first counter reaches zero, it is no more decremented, but the credentials are not yet blocked. Instead, the second counter is pre-decremented before each new credentials verification (step 2.VC on Fig.2). As an alternative, the counter can be decremented after each new credentials verification. If the presented value was good, both counters are reset to their respective maximum values (step 5.VC on Fig.2), otherwise they are unchanged and a waiting loop is performed (step 6.VC on Fig.2). If the second counter reaches zero, the credentials are blocked (step 3.VC on Fig.2). After the second counter has been decremented due to the first counter having reached zero and a verification of the identity of the entity requesting a service has failed, a waiting loop mechanism is activated (steps 1.WL to 7.WL on Fig.2).

Due to specific constraints of smart-card technology, the design of the waiting loop mechanism requires specific features. Indeed, the smart-cards have no permanent clock, can be removed from a smart-card reader at any time by the user, can be remotely reset by an attacker at any time, and have to comply with ISO 7816 standards.
According to the invention, the waiting loop mechanism comprises a waiting loop counter and a waiting loop flag. The counter and the flag are managed in any available programmable non-volatile memory of the smart-card (e.g. EEPROM). Both have a global scope, i.e. they remain visible outside the context of the waiting operation and of the credentials verification.
It is to be noted that advantageously, there is only one waiting loop counter and one waiting loop flag for the smart-card, while the number of attempts counters is linked (proportional) to the number of credentials stored in the smart-card memory.
With smart-cards having no permanent clock, if the clock frequency is increased, the duration of the loop is reduced. As an alternative, if the smart-card chip has an embedded timer, the counter might be replaced by the elapsed time given by the timer. The advantage could be a better controlled duration of the waiting loop.

The waiting loop mechanism consists in the following succession of steps :
- step 1 : setting a waiting loop flag (step 1.WL on Fig.2),
- step 2 : letting lapse a predetermined amount of time (step 2.WL on Fig.2),
- step 3 : informing the entity requesting a service (or host) that the smart-card is alive (i.e. it has not timed out) (step 3.WL on Fig.2),
- step 4 : decrementing the waiting loop counter, and if it is non zero going back to step 2 (steps 4.WL and 5.WL on Fig.2),
- step 5 : resetting the waiting loop counter to its maximum value (step 6.WL on Fig.2),
- step 6 : clearing the waiting loop flag (step 7.WL on Fig.2).

It is to be noted that the flag is initially cleared.

Advantageously, step 2 (step 2.WL on Fig.2) is performed though a series of NOP (no operation, i.e. dummy instruction), not exceeding the maximum duration negotiated thanks to the ATR (Answer To Reset) because it is important that there is no time out.
Following ISO 7816 constraints, step 3 consists in sending a specific byte to the host, namely the value $60 (step 3.WL on Fig.2).

As a variant of this embodiment of the method according to the invention, it is advantageous to use a timer (in case the portable object has a timer available) instead of the waiting loop counter. In any case, a marker indicating the current level of completion of the loop needs to be stored in a non volatile memory of the portable object.

The waiting loop can be interrupted, either accidentally or on purpose. For example, the end user might wonder what's happening with his smart-card and remove it from the reader, or an attacker might want to block the credentials quicker and send a reset order to the smart-card in order to stop the waiting loop mechanism.

In order to prevent this, the waiting loop status (counter and flag) has a global scope, and a component of the smart-card (e.g. the application protocol data units manager, also called APDU manager) is modified in order to resume the waiting operation in case it was interrupted during a previous session (steps 3.AM and 4.AM performed by APDU Manager on Fig.2).
This mechanism will be described in a more detailed way here below.

As shown in Figure 1, when a smart-card is reset (reset signal on Fig. 1 or 2), it performs a certain number of operations : various tests, selection of the communication protocol, selection of the voltage for the power supply, selection of the communication speed ...etc. If these operations are successful, the smart-card switches to a mode (step 1.PAM on Fig.1 - step 1.AM on Fig.2) in which it can receive orders from the host (entity requesting a service).
These orders are called APDU (application protocol data units) commands. The APDU manager is a software running on the smart-card which is responsible for receiving APDU commands (APDU1, ... , APDU N, Verify Credentials APDU) from the host and dispatching them (step 2.PAM on Fig.1 - step 5.AM on Fig.2) either to the smart-card operating system, or to applets that have been loaded in the smart-card memory, or to any relevant module of the smart-card.

As shown in Figure 2, the APDU manager has to be modified to perform the method of the invention. Before an APDU command is dispatched, the APDU manager has to check the state of the waiting loop flag (step 3.AM on Fig.2). In case the flag was cleared, the APDU command is processed normally by the smart-card.
Otherwise, it means that a waiting loop has been interrupted and needs to be resumed. The APDU manager calls the waiting loop mechanism described previously. Since the waiting loop counter is stored in non-volatile memory and has a global scope, the waiting loop continues where it had previously stopped. In case the waiting loop is interrupted again, it will be recovered thanks to the same mechanism.
Only when the waiting loop has been completely performed will the APDU manager start processing the APDU command that was called. From the external world point of view, the smart-card will behave exactly as before except that the execution of the APDU commands will take much longer than it does normally.

In addition, it is possible, as shown on Fig.2, to allow certain APDU commands (such as a diagnostic APDU command) to be performed prior to the waiting loop. The purpose of the diagnostic APDU is to check whether the smart-card is under DOS attack.

Advantageously, the waiting loop is performed in the first APDU command that is sent to the smart-card.
Thus, the waiting loop is compliant with standard ISO constraints and should be transparent to the existing systems. Consequently, no update on the client software should be necessary in order to deploy the DOS type attacks protected smart-cards. It is to be noted that the waiting loop cannot happen at any time. In particular, if the waiting loop is done just after the reset process, then the smart-card might be considered as not working. Also, Windows 2000 and XP (software from Microsoft) power down the smart-card when no connections are made during a certain time, which justifies informing the host that the smart-card is still alive and processing.
In addition, the waiting loop serves as a protection avoiding the credentials to be blocked, and also enables to warn the user that an attack or a bug (at development stage) is threatening the smart-card. Consequently, it is advantageous that the waiting loop, in order to be noticed, occurs at a time when the smart-card is expected to perform certain operations and return a result.

The waiting loop mechanism can be tuned with two parameters, namely the duration of the loop and the maximum number of slowed attempts.
The duration of the loop is proportional to the waiting loop counter and is unique for all the credentials stored in the smart-card memory. The maximum number of slowed attempts is directly linked to the new number of attempts counter introduced according to the invention. Advantageously, the maximum number of slowed attempts is different for each type of credential, or even for each credential stored in the smart-card memory.
Several conflicting constraints determine the best value for the above mentioned parameters, in particular:
- the maximum number of slowed attempts multiplied by the duration of the loop should be long enough to render the DOS attack success very unlikely,
- the maximum number of slowed attempts should be small enough to not increase the likelihood of credentials guessing attacks,
- the duration of the loop should be long enough for the user to notice that something is going wrong and report it to an helpdesk service,
- the duration of the loop should be short enough for the users not to be blocked too long during their work. Indeed, although this state is temporary and does not require any intervention on the smart-card in order to come back in a normal state, it is inconvenient.
As an example, a waiting loop of approximately 30 minutes and a maximum number of 100 slowed attempts seem to be reasonable parameters for a transport key, for open platform keys, and for unblock codes. These keys and codes need to be strong, for example chosen randomly or cryptographically ...etc.
For PIN codes, the maximum number of attempts should be much lower, for example 5 slowed attempts, unless a very robust PIN policy has been defined and enforced. Reducing the maximum number of attempts increases the probability of a successful DOS attack on the PIN. However, in most situations, such attack could be recovered without changing the smart-card physically and does not represent an important threat.

Of course the actual values can be customized at personalization stage according to the exact application and security requirements.
The smart-card operating system should prevent these parameters from exceeding the limits that guarantee a proper level of security.

With the method of the invention, the security level of the smart-card with regard to DOS type attack is improved, and the security level with regard to attacks different than the DOS type attack is maintained.

In this view, it is advantageous that the counters are pre-decremented, or that a flagging mechanism is put in place in order to prevent tearing attacks and the like.
Also, when applicable, it is advantageous to prefer challenge response rather than credentials comparison. In case direct credentials comparison is required (e.g. PIN verification), the credentials bits should be verified in random order, and optionally should be XORed with random, in order to prevent simple power analysis (SPA) attacks and the like. Due to the fact that the number of attempts is increased, the likelihood of a power analysis attack success is greater if such a countermeasure is not in place.
It is advantageous that the credentials are as unpredictable as possible. This is easily achieved with transport keys which can be obtained by diversification of a random master key for example. In addition, the smart-card operating system OS should enforce that the maximum number of slowed attempts be small enough even for such credentials (e.g. inferior to 256).
For credentials that are potentially predictable (e.g. when they are not defined by the system but by the user), a proper security policy should be enforced. For example, the PIN should follow a PIN policy in order to avoid trivial and predictable PIN values, and this can be enforced within the smart-card when possible, in order to prevent PIN guessing attacks. Due to increased number of attempts, a brute force attack (which is ineffective on random credentials) could be replaced by a much more efficient attack in case there are poor PIN. Again, the initial value of PIN second counter shall be much lower than with unpredictable credentials.

Optionally, a command could be implemented on the smart-card in order to notify the external world that a DOS attack or wrong manipulation is underway.
The APDU manager could let this command execute without applying the delay loop (the delay would apply to the next command anyway).
Diagnostic tools could poll this command in order to check what's going on. The smart-card would reply with a status word SW_DOS_UNDERWAY or $9000 (steps 1.D and 2.D on Fig.2).
Another APDU command would be necessary in order to let the administrators reset the DOS_UNDERWAY flag (DOS flag on Fig.2).

The client application does not have to be modified, which is one of the benefits of the invention. Only the administrative tools, e.g. the card management system (CMS) or personalization tools need to be updated, but not the software ("client application") that is rolled out on each end user's PC.

However, in order to be more user friendly, the new behavior of the card could be taken into account in the client application and an explicit warning message could be displayed to the user, thanks to the notification command described previously. Alternatively, the client application could send a "dummy" APDU command such as a Select_root that would potentially trigger the waiting loop. If there's indeed a waiting loop, the client application could detect it and notify the user that the card is temporarily unavailable. Otherwise normal processing would proceed.
Without such a modification in the client application, the end user will experience a temporary denial of service : the client application will be blocked during the predefined time (for example 30 minutes, as discussed previously), which will inform him that something wrong is going on.
After a while, the user would contact a helpdesk or a technical support employee, which would quickly diagnose the DOS attack. Since the attack is likely to be rare, it shouldn't be an issue, and modifying the client application is not necessarily worth the investment. Especially when considering that the virus could circumvent this notification and hide it to the client application and to the end user.

The behavior of an attacked system will be described here below as an example, and the benefit of the invention will be described. Let's consider the following situation arising in an corporation with around 10,000 employees equipped with PKI (public key infrastructure) type smart-card used as corporate badge for various purposes (physical access to corporation sites, computer network log-on, email signature and encryption...etc.), where a virus (e.g. sent to the employees in an e-mail attachment) hits the corporation. This virus consists in blocking the badges credentials by presenting wrong values via the computer network.

Without the invention, the virus could quickly (around a fraction of seconds) erase the first counter (by a few wrong credentials presentations). All 10,000 users could be quickly blocked and would have to change their badges. Obviously, this could have a very significant financial and security impact on the corporation.
According to the invention, as soon as the second counter starts being decremented, the waiting loop mechanism makes it very long for the virus to erase the counter, and the user is very quickly aware that his badge is being attacked.
Even if the client application does not notify the user that an attack is underway, or if the virus intercepts the notification and prevents the client application from noticing it, the user will experience a temporary denial of service DOS.
As indicated before, the smart-cards could be personalized to wait 30 minutes after each additional wrong attempt, and wait 100 wrong attempts before blocking the credentials.
This means that during thirty minutes, the user will be unable to perform any smart-card-related actions such as :
- logon to the personal computer PC through an authentication system like Kerberos,
- opening a virtual private network (VPN) connection,
- decrypting files on the hard disk using specific software like Entrust ICE
- signing e-mails with email software like Outlook,
- unlocking the screen saver,
- connecting to a secure web server in secure socket layer (SSL) through internet browser like Netscape.
To be more accurate, the user can initiate any of these tasks, and in theory it will work but it will take around 30 minutes longer than usual. During 30 minutes, the smart-card keeps sending a specific ISO byte, which tells the smart-card reader PC/SC stack that it is still processing and that the reader should not time out.
This also means that before blocking the credentials in question, the user should experience 50 hours of denial of service DOS per credentials (100 times 30 minutes) without noticing the abnormal situation.

Since actually blocking the card usually means blocking a PIN, a PUK and a key blocking the card requires above a hundred hours of DOS.
It also requires that the virus is intelligent enough to intercept all legitimate credentials verifications. Otherwise the counters are reset to their maximum value, and the delay (more than 100 hours) restarts from the beginning. Such a virus feature cannot be guaranteed to work in all situations over such a long period (the smart-card could be plugged in another PC that is not infected by the virus, and the card could be unblocked by accident...).
Typical use of corporate badge consists in carrying the badge with you, which means that it is unplugged from the PC as soon as you leave your desk (in order to open the doors, pay the cafeteria, access the parking lots, etc.).
Only when the user is in front of his PC with the smart-card connected can the virus attack the credentials. Let's make the assumption that employees spend an average 5 hours a day in front of their PC (which is a lot, as it's an average for every employees and for every day of work), and that the smart-card is plugged all this time. Even with this pessimistic hypothesis, the virus needs at least one full working month before blocking the card (this corresponds to the shortest possible delay computed in the previous page, which was above a hundred hours).
It is completely unrealistic that users spend more than one month without being able to access any services linked to smart-card (and quite often this includes the inability to use the PC at all, since corporate badges are usually used to login to the PC) without reporting any problem to a helpdesk employee or a technical support employee. This is extremely unlikely to happen. It is even more unrealistic that all of the 10,000 employees are unable to access the services secured by the smart-card during more than one month and don't report anything.
Then, at least one employee will call the helpdesk, saying that the client application displayed a message such as "your smart-card is under DOS attack, your PC must be infected by a virus, please contact your helpdesk and update your anti-virus" or simply complaining that the smart-card does not work.
The helpdesk can analyze the smart-card and verify that there's a DOS attack, for example with the help of the diagnostic APDU, or just by verifying credentials with a wrong value and checking if the smart-card is in slowed state.

As soon as the helpdesk finds a single user with the problem it could check some other users at random. If the helpdesk notices that a few of them are also infected it should apply an emergency plan for the whole corporation, for example ask employees to unplug the card from their reader until an anti-virus update is available and is successfully run on the PC. Optionally, it is possible to ask the users to connect to a kind of self service badge management system and perform authentication with all relevant credentials in order to reset all counters to their maximum value.
In quick delay (around 30 minutes) after the anti-virus cleaned the PCs, all badges will be in working order.
Consequently, it is not possible anymore that a high number of users are blocked, and massive quantities of new badges need to be produced and personalized as replacement badges.

This example can be generalized and the invention could be implemented in other environments. In such a case the parameters described previously needs to be adapted to the constraints of the portable object.

Also, all the implementations were presented with a counter or different counters being decremented. It is obvious for a man skilled in the art to choose an alternative solution consisting in incrementing the counter(s) rather than decrementing the counter(s).

## Claims

1. Method for protecting a portable object against denial of service type attacks, said portable object comprising a memory where at least one credential is stored, each credential being associated with a service, the method comprises the steps of :
- verifying that the entity requesting a service is an authorized entity for accessing the service, based on an algorithm involving the credential,
- delivering the requested service only when the verification step succeeded,
- blocking the credential associated with the service after a certain number of verification step failed,
wherein, when the verification step failed, the method further comprises the steps of :
- waiting during a duration before allowing a new verification step.

2. Method for protecting a portable object against denial of service type attacks as recited in claim 1, wherein the waiting duration is constant for each failed verification step.

3. Method for protecting a portable object against denial of service type attacks as recited in claim 1, wherein the waiting duration is variable for each failed verification step.

4. Method for protecting a portable object against denial of service type attacks as recited in one of the previous claims, wherein the waiting duration is equal to zero for a first predetermined number of failed verification step, and the waiting duration is greater than zero for a second predetermined number of failed verification step.

5. Method for protecting a portable object against denial of service type attacks as recited in one of the previous claims, wherein the step of waiting during a duration is resumed in case said step is interrupted before the duration has elapsed.

6. Method for protecting a portable object against denial of service type attacks as recited in claim 1, wherein said credential is a personal identification number or a key or a code.

7. Method for protecting a portable object against denial of service type attacks as recited in claim 1, wherein said entity is a user or a terminal or a server or an application.

8. Method for protecting a portable object against denial of service type attacks as recited in one of the previous claims, wherein the method further comprises the steps of :
- decrementing a counter associated with the at least one credential each time a verification step is performed, said counter having values ranging between an initial value and a credential blocking value,
- resetting the counters to the initial value when the verification step succeed,
and, when the counter has reached an intermediate value, the method further comprises the steps of :
- waiting during a duration when verification step failed,
- blocking the credential when the counter reaches the credential blocking value.

9. Method for protecting a portable object against denial of service type attacks as recited in one of the claims 1 to 7, wherein the method further comprises the steps of :
- decrementing a first counter associated with the at least one credential each time a verification step is performed, said first counter having values ranging between a first initial value and an intermediate value,
and, when the first counter has reached the intermediate value, the method further comprises the steps of :
- decrementing a second counter associated with the first counter, said second counter having values ranging between a second initial value and a credential blocking value,
- resetting the first counter to the first initial value and the second counter to the second initial value when verification step succeed,
- waiting during a duration when verification step failed,
- blocking the credential when the second counter reaches the credential blocking value.

10. Method for protecting a portable object against denial of service type attacks as recited in one of the previous claims, wherein, when verification step failed, the step of waiting during a determined duration is implemented by a waiting loop mechanism.

11. Method for protecting a portable object against denial of service type attacks as recited in claim 8, wherein the decrementing step of the counter or the first counter or the second counter are performed before the verification step.

12. Method for protecting a portable object against denial of service type attacks as recited in claim 8, wherein the decrementing step of the counter or the first counter or the second counter are performed after the verification step.

13. Portable object, in particular a smart-card, comprises :
- a memory where at least one credential is stored, each credential being associated with a service, said credential being used to verify that the entity requesting a service is an authorized entity for accessing the service,
- a counter associated with the at least one credential which is decremented each time a verification that the entity requesting a service is an authorized entity for accessing the service failed, said counter having values ranging between an initial value and a credential blocking value, said counter being reset to the initial value when verification succeed,
wherein said portable object further comprises :
- a waiting loop mechanism which is activated when the counter has reached a intermediate value and each time a verification failed.

14. Portable object, as recited in the previous claim, wherein the counter comprises a first and a second counter, the first counter associated with the at least one credential being decremented each time a verification that the entity requesting a service is an authorized entity for accessing the service failed, said first counter having values ranging between a first initial value and an intermediate value, the second counter being decremented when the first counter has reached the intermediate value and each time a verification that the entity requesting a service is an authorized entity for accessing the service failed, said second counter having values ranging between a second initial value and a credential blocking value.

15. Portable object, as recited in one of the claims 13 to 14, wherein the waiting loop mechanism comprises a loop flag used to resume the step of waiting during a duration performed by the waiting loop mechanism in case said step is interrupted before the duration has elapsed.

16. A computer program product comprising a computer readable medium, having thereon computer program code means, when said program is loaded into the memory of the portable object, to make the portable object execute the method for protecting said portable object against denial of service type attacks as recited in any of the claims 1 to 12.
